# EUROPEAN PATENT APPLICATION

(11) **EP 4 290 812 A1**
(43) Date of publication of application: **13.12.2023**
(21) Application number: 22762393.1
(22) Date of filing: 22.02.2022
(51) Int. Cl.: H04L 12/46

(54) **PACKET TRANSMISSION METHOD AND APPARATUS**

(30) Priority: 02.03.2021 CN 202110229661; 20.05.2021 CN 202110553974
(71) Applicant: Huawei Technologies Co., Ltd., Shenzhen, Guangdong 518129 (CN)
(72) Inventor: HU, Zhibo, Shenzhen, Guangdong 518129 (CN); YANG, Ping'an, Shenzhen, Guangdong 518129 (CN); HAN, Tao, Shenzhen, Guangdong 518129 (CN); DONG, Jie, Shenzhen, Guangdong 518129 (CN)
(74) Representative: Isarpatent
(86) International application number: PCT/CN2022/077226
(87) International publication number: WO 2022/183927

(57) **Abstract**

Embodiments of this application provide a packet transmission method and apparatus. A global identifier may be added to a packet based on a port for transmitting a packet, so that another network device verifies the packet based on the global identifier and the port for transmitting the packet. Therefore, a logically independent private network is established without establishing a VPN routing table, and burden of a network device is reduced. The packet transmission method includes: A first network device receives a first data packet; and the first network device updates the first data packet to obtain a second data packet, where the second data packet includes a global identifier; the first network device sends the second data packet to a second network device, where the global identifier is used by the second network device to verify the second data packet based on a correspondence, and the correspondence is a correspondence between the global identifier and an egress port through which the second network device transmits the second data packet.

## Description

This application claims priority to Chinese Patent Application No. 202110229661.1, filed with the China National Intellectual Property Administration on March 2, 2021 and entitled " METHOD, DEVICE, AND SYSTEM FOR IMPLEMENTING VPN", and to Chinese Patent Application No. 202110553974.2, filed with the China National Intellectual Property Administration on May 20, 2021 and entitled "PACKET TRANSMISSION METHOD AND APPARATUS", which are incorporated herein by reference in their entireties.

### TECHNICAL FIELD

This application relates to the field of communication technologies, and in particular, to a packet transmission method and apparatus.

### BACKGROUND

A virtual private network (Virtual Private Network, VPN) technology is a common technology for establishing a private communication network, and may establish a private communication network in a public network. Data transmitted in the private communication network is logically isolated from other data transmitted in the public network. In this way, specific data can be accessed only through the private communication network. This ensures data security.

To establish a private communication network in a public network, a VPN routing table may usually be deployed on a provider edge (Provider Edge, PE) device. The VPN routing table includes a correspondence between an internet protocol (Internet Protocol, IP) address of one or more customer edge (Customer Edge, CE) devices and an egress port of the PE device, and is independent of the public network routing table. In this way, when receiving a packet having a VPN identifier, the PE device may determine, based on the VPN identifier in the packet, that the packet needs to be transmitted via the VPN, to determine an egress port from the VPN routing table based on a destination address of the packet, and send the packet through the egress port. In this way, a public network routing table and a VPN routing table that are separate are set, to isolate VPN traffic from public network traffic.

To establish the VPN routing table, the PE device usually records identifiers of a plurality of CE devices connected to the PE device, and sends the identifiers to another PE device by using a network protocol such as the border gateway protocol (Border Gateway Protocol, BGP), so that the another PE device learns IP addresses of the CE devices. Therefore, the VPN routing table is established. In this case, when there are a large quantity of CE devices, the PE device needs to learn a large amount of data, and a requirement performance of the PE device is high.

### SUMMARY

Embodiments of this application provide a packet transmission method and apparatus. A global identifier may be added to a packet based on a port for transmitting a packet, so that another network device verifies the packet based on the global identifier and the port for transmitting the packet. Therefore, a logically independent private network is established without establishing a VPN routing table, and burden of a network device is reduced.

According to a first aspect, an embodiment of this application provides a packet transmission method. The method may be applied to a first network device in a network system, and the first network device may be a customer-premises equipment (Customer-Premises Equipment, CPE) or a PE device. After receiving a first data packet, the first network device may update the first data packet based on the global identifier, to obtain a second data packet including the global identifier, and send the second data packet to a second network device. The global identifier is an identifier of a private network in a network system, and is used by the second network device to verify the second data packet based on a correspondence, where the correspondence is a correspondence between the global identifier and an egress port through which the second network device transmits the second data packet. In other words, the first network device may add the global identifier to the first data packet transmitted by using the private network, so that after receiving the second data packet, the second network device can verify the second data packet based on the egress port for transmitting the second data packet. In this way, establishing a correspondence between a network port and a global identifier is equivalent to binding the network port to a private network corresponding to the global identifier, so that another packet in a public network cannot be transmitted by using the network port bound to the private network. In this way, target network traffic is isolated from public network traffic without establishing a VPN routing table, which is equivalent to establishing a logically independent target network on the public network. Because the method provided in this embodiment of this application does not need to establish the VPN routing table, the PE device does not need to advertise, to another PE device in the VPN, an IP address of a CE device connected to the PE device, and the burden of the network device is reduced.

Before the first network device updates the first data packet, the first network device may determine the global identifier first. This may specifically include the following three implementations.

In a first possible implementation, if the first network device is a PE device, the first network device may determine the global identifier based on an ingress port for receiving the first data packet. Specifically, the PE device may prestore a correspondence between an ingress port and a global identifier, and a packet that is received from the ingress port and that is recorded in the correspondence is a packet transmitted by using the private network. In this way, after receiving the first data packet, if the ingress port for receiving the first data packet is the ingress port recorded in the correspondence, the PE device may determine, based on the correspondence, the global identifier corresponding to the ingress port, to update the first data packet based on the global identifier, to obtain the second data packet.

When the first network device is the PE device, the first network device may determine, before sending the second data packet, an egress port for sending the second data packet. Specifically, the first network device may determine a destination address based on the first data packet, where the destination address indicates a location of a destination device of the first data packet in the network system. After determining the destination address of the first data packet, the PE device may search a public network routing table for an egress port corresponding to the destination address, to send the second data packet through the egress port. It can be learned that, in the packet transmission method provided in this embodiment of this application, without establishing the VPN routing table, a packet can be transmitted by using the private network by using only the public network routing table.

In a second possible implementation, the first network device is a CPE device, and the first network device may determine the global identifier based on an egress port for sending the second data packet. Specifically, the CPE may prestore a correspondence between an egress port and a global identifier, and a packet that is received from the egress port and that is recorded in the correspondence is a packet transmitted by using the private network. In this way, the CPE may determine, based on the destination address of the first data packet and the public network routing table, the egress port for sending the second data packet, determines first, based on the correspondence, a global identifier corresponding to the egress port, and then update the first data packet based on the global identifier to obtain the second data packet.

In a third possible implementation, the first network device is a CPE device, and the first network device may determine the global identifier based on a packet characteristic of the first data packet. The packet characteristic may be, for example, characteristic information such as a destination address or a quintuplet. Specifically, the first network device may prestore a correspondence between the packet characteristic and the global identifier. After receiving the first data packet, the first network device may determine whether a packet characteristic of the first data packet matches the packet characteristic recorded in the correspondence. If a packet characteristic of the first data packet matches the packet characteristic recorded in the correspondence, the first network device may determine the global identifier based on the correspondence and the packet characteristic, and then update the first data packet based on the global identifier to obtain the second data packet.

In some possible implementations, the global identifier may be configured by a control device for the first network device, and the first network device may receive a global identifier sent by the control device. For example, skilled persons may configure a private network on the control device. The control device may establish a correspondence between a network port and a global identifier based on a private network set by a user, and send the correspondence to a network device, so that the network device adds the global identifier to a packet based on the correspondence, or verifies a packet based on the global identifier.

In some possible implementations, when the first network device is the CPE, the control device that sends the global identifier to the first network device may include a software-defined wide area network (Software-defined Wide-Area Network, SD-WAN) controller.

In some possible implementations, if the second data packet is an internet protocol version 6 (Internet Protocol Version 6, IPv6) packet, the global identifier may be carried in a flow label (flow label) field and/or a destination address (destination address) field of a basic header of the second data packet.

In some possible implementations, if the second data packet is the IPv6 packet, the global identifier may be carried in a destination options header (Destination Options Header, DOH) and/or a hop-by-hop options header (Hop-by-hop Options Header, HBH) of the second data packet.

In some possible implementations, if the second data packet is a multi-protocol label switching (Multi-Protocol Label Switching, MPLS) packet, the global identifier may be carried in an MPLS label field and/or an entropy label (Entropy Label) field in the basic header of the second data packet.

In some possible implementations, the global identifier includes one or more of the following: a slice identifier (Slice identifier, Slice ID), a virtual network identifier (virtual network identifier, VNID), and a preset identifier.

In some possible implementations, the first network device and the second network device belong to an overlay (Overlay) network system.

According to a second aspect, an embodiment of this application provides a packet transmission method. The method may be applied to a second network device in a network system. The second network device is connected to a first network device, and may be a CPE device or a PE device. The second network device may receive a second data packet of the first network device first, where the second data packet includes a first global identifier added by the first network device. After receiving the second data packet, the second network device may determine, based on a correspondence between an egress port for forwarding the second data packet and a second global identifier, the second global identifier corresponding to the egress port for forwarding the second data packet. After obtaining the second global identifier, the second network device may compare whether the first global identifier matches the second global identifier. If the first global identifier does not match the second global identifier, it indicates that the second data packet is not allowed to be forwarded through the egress port corresponding to the second global identifier; if the first global identifier matches the second global identifier, it indicates that the second data packet is allowed to be forwarded through the egress port corresponding to the second global identifier. The second network device may forward the second data packet based on the egress port. In this way, establishing a correspondence between a network port and a global identifier is equivalent to binding the network port to a private network corresponding to the global identifier, so that another packet in a public network cannot be transmitted by using the network port bound to the private network. In this way, target network traffic is isolated from public network traffic without establishing a VPN routing table, which is equivalent to establishing a logically independent target network on the public network. Because the method provided in this embodiment of this application does not need to establish the VPN routing table, the PE device does not need to advertise, to another PE device in the VPN, an IP address of a CE device connected to the PE device, and the burden of the network device is reduced.

In some possible implementations, before performing a verification on the second data packet, the second network device may determine the egress port for forwarding the second data packet first, to determine, based on the correspondence, the second global identifier corresponding to the egress port. Specifically, the second network device may search, based on a destination address of the second data packet, a public routing table for an egress port corresponding to the destination address, and then determine, based on the correspondence, the second global identifier corresponding to the egress port.

In some possible implementations, the second network device may further verify the second data packet based on an ingress port for receiving the second data packet. Specifically, the second network device may prestore a correspondence between the ingress port and the global identifier. After receiving the second data packet through the ingress port, the second network device may determine, based on the correspondence, a third global identifier corresponding to the ingress port for receiving the second data packet, and verify the second data packet by determining whether the third global identifier matches the first global identifier. If the third global identifier matches the first global identifier, it indicates that the second data packet is allowed to be received by the second network device through the egress port corresponding to the third global identifier, and the second network device may continue a subsequent verify procedure.

In some possible implementations, the first network device may be the customer-premises equipment CPE, and the second network device may be the provider edge PE device.

In some possible implementations, both the first network device and the second network device may be PE devices.

In some possible implementations, the egress port through which the second network device forwards the second data packet is connected to a third network device. In this case, when forwarding the second data packet, the second network device may forward the second data packet to the third network device through the egress port. Alternatively, the third network device may be the CPE. Before forwarding the second data packet, the second network device may adjust the second data packet. For example, some packet headers of the second data packet may be removed.

In some possible implementations, the second network device may receive the second global identifier sent by a control device first.

In some possible implementations, if the second data packet is an IPv6 packet, the first global identifier may be carried in a flow label field and/or a destination address field in a basic header of the second data packet.

In some possible implementations, if the second data packet is an IPv6 packet, the first global identifier may be carried in a DOH and/or an HBH of the second data packet.

In some possible implementations, if the second data packet is an MPLS packet, the first global identifier may be carried in an MPLS label field and/or an entropy label field in a basic header of the second data packet.

In some possible implementations, the global identifier includes one or more of the following: a slice identifier (Slice identifier, Slice ID), a virtual network identifier (virtual network identifier, VNID), and a preset identifier.

In some possible implementations, the first network device and the second network device belong to an overlay (Overlay) network system.

According to a third aspect, an embodiment of this application provides a packet transmission apparatus, where the apparatus is used in a first network device and includes: a receiving unit, configured to receive a first data packet; a processing unit, configured to update the first data packet to obtain a second data packet, where the second data packet includes a global identifier, the global identifier is used by a second network device to verify the second data packet based on a correspondence, and the correspondence is a correspondence between the global identifier and an egress port through which the second network device transmits the second data packet; a sending unit, configured to send the second data packet to a second network device.

In some possible implementations, the first network device is a provider edge PE device; the processing unit is further configured to determine, based on a stored correspondence between an ingress port through which the PE device receives the first data packet and a global identifier, the global identifier corresponding to the ingress port.

In some possible implementations, the processing unit is further configured to search a public network routing table based on a destination address of the first data packet, to determine an egress port matching the destination address; the sending unit is configured to send the second data packet to the second network device through the egress port matching the destination address.

In some possible implementations, the first network device is a customer-premises equipment CPE; the processing unit is further configured to determine, based on a stored correspondence between an egress port through which the CPE sends the first data packet and a global identifier, the global identifier corresponding to the egress port through which the CPE sends the first data packet.

In some possible implementations, the first network device is a customer-premises equipment CPE; the processing unit is further configured to determine, based on a correspondence between a packet characteristic of the first data packet and a global identifier, the global identifier corresponding to the packet characteristic.

In some possible implementations, the receiving unit is further configured to receive the global identifier from a control device.

In some possible implementations, the first network device is the CPE, and the control device includes a software-defined wide area network SD-WAN controller.

In some possible implementations, the second data packet is an IPv6 packet, and the global identifier may be carried in a field of a basic header of the second data packet, for example, may be carried in a flow label field and/or a destination address field.

In some possible implementations, the second data packet is an IPv6 packet, and the global identifier may be carried in an extension header of the second data packet, for example, carried in a DOH and/or an HBH.

In some possible implementations, the second data packet is an MPLS packet, and the global identifier may be carried in a field of a basic header of the second data packet, for example, may be carried in an MPLS label field and/or an entropy label field.

In some possible implementations, the global identifier includes one or more of the following: a slice identifier slice ID, a virtual network identifier VNID, and a preset identifier.

In some possible implementations, the first network device and the second network device belong to an overlay network system.

According to a fourth aspect, an embodiment of this application provides a packet transmission apparatus, where the apparatus is used in a second network device and includes: a receiving unit, configured to receive a second data packet from a first network device, where the second data packet includes a first global identifier; a processing unit, configured to determine, based on a correspondence between an egress port for forwarding the second data packet and a second global identifier, the second global identifier corresponding to the egress port; a forwarding unit, configured to forward the second data packet based on the egress port in response to a match between the first global identifier and the second global identifier.

In some possible implementations, the processing unit is further configured to search a public network routing table based on a destination address of the second data packet, to determine the egress port matching the destination address.

In some possible implementations, the processing unit is further configured to discard the second data packet in response to a mismatch between the first global identifier and the second global identifier.

In some possible implementations, the processing unit is configured to determine, based on a correspondence between an ingress port for receiving the second data packet and a third global identifier, the third global identifier corresponding to the ingress port; the forwarding unit is configured to determine, based on the correspondence between the egress port for sending the second data packet and the second global identifier, the second global identifier corresponding to the egress port in response to a match between the first global identifier and the third global identifier.

In some possible implementations, the first network device is the customer-premises equipment CPE, and the second network device is the provider edge PE device.

In some possible implementations, both the first network device and the second network device are PE devices.

In some possible implementations, the forwarding unit is configured to forward the second data packet to a third network device based on the egress port, where the third network device is a CPE.

In some possible implementations, the receiving unit is further configured to receive the second global identifier from a control device.

In some possible implementations, the second data packet is an IPv6 packet, and the second global identifier may be carried in a field of a basic header of the second data packet, for example, may be carried in a flow label field and/or a destination address field.

In some possible implementations, the second data packet is an IPv6 packet, and the second global identifier may be carried in an extension header of the second data packet, for example, carried in a DOH and/or an HBH.

In some possible implementations, the second data packet is an MPLS packet, and the second global identifier may be carried in a field of a basic header of the second data packet, for example, may be carried in an MPLS label field and/or an entropy label field.

In some possible implementations, the first global identifier includes one or more of the following: a slice identifier slice ID, a virtual network identifier VNID, and a preset identifier.

In some possible implementations, the first network device and the second network device belong to an overlay network system.

According to a fifth aspect, an embodiment of this application provides a network device. The network device includes a processor chip and a memory. The memory is configured to store instructions or program code, and the processor chip is configured to invoke the instructions or the program code from the memory and run the instructions or the program code, to perform the packet transmission method according to the first aspect.

According to a sixth aspect, an embodiment of this application provides a network device. The network device includes a processor chip and a memory. The memory is configured to store instructions or program code, and the processor chip is configured to invoke the instructions or the program code from the memory and run the instructions or the program code, to perform the packet transmission method according to the second aspect.

According to a seventh aspect, an embodiment of this application provides a computer-readable storage medium, including instructions, a program, or code, where when the instructions, the program, or the code is executed on a computer, the computer is enabled to perform the packet transmission method according to the first aspect or the second aspect.

### BRIEF DESCRIPTION OF DRAWINGS

FIG. 1 is a schematic diagram of a structure of a network system 100 according to an embodiment of this application;
FIG. 2 is a schematic diagram of a structure of a network system 200 according to an embodiment of this application;
FIG. 3 is an interaction signaling diagram of a packet transmission method according to an embodiment of this application;
FIG. 4 is another interaction signaling diagram of a packet transmission method according to an embodiment of this application;
FIG. 5 is a schematic diagram of a structure of a packet transmission apparatus 500 according to an embodiment of this application;
FIG. 6 is a schematic diagram of a structure of a packet transmission apparatus 600 according to an embodiment of this application;
FIG. 7 is a schematic diagram of a structure of a network device 700 according to an embodiment of this application; and
FIG. 8 is a schematic diagram of a structure of a network device 800 according to an embodiment of this application.

### DESCRIPTION OF EMBODIMENTS

The following describes the conventional technology and the packet transmission method provided in embodiments of this application with reference to the accompanying drawings.

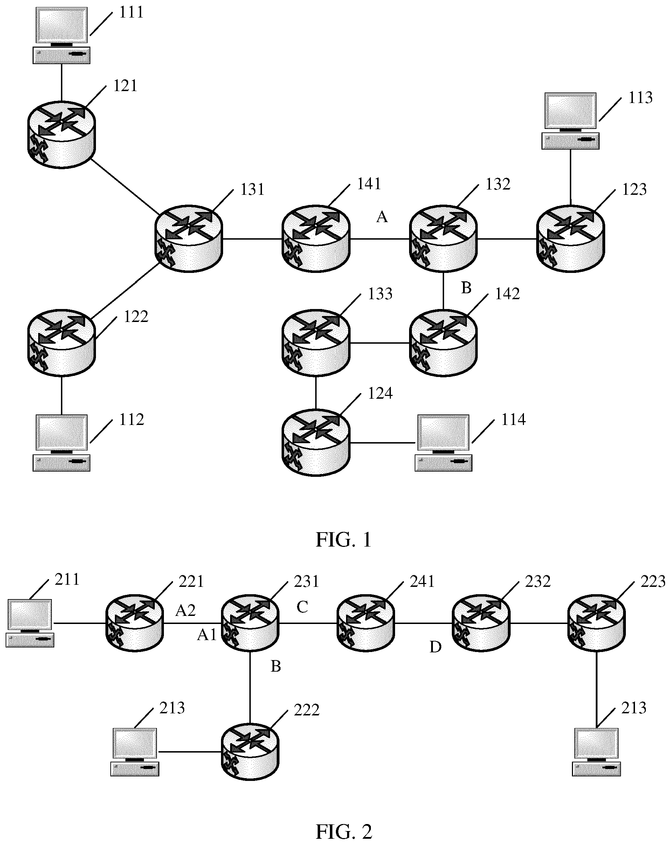

FIG. 1 is a schematic diagram of a structure of a system 100 according to an embodiment of this application. The network system 100 includes a terminal device 111, a terminal device 112, a terminal device 113, a terminal device 114, a CE device 121, a CE device 122, a CE device 123, a CE device 124, a PE device 131, a PE device 132, a PE device 133, and a provider (Provider, P) device 141 and a P device 142. The CE device 121 is separately connected to the terminal device 111 and the PE device 131, the CE device 122 is separately connected to the terminal device 112 and the PE device 131, the CE device 123 is separately connected to the terminal device 113 and the PE device 132, and the CE device 124 is separately connected to the terminal device 114 and the PE device 133. The P device 141 is separately connected to the PE device 131 and the PE device 132, and the P device 142 is separately connected to the PE device 132 and the PE device 133. The PE device 132 has two ports: a network port A and a network port B, and is connected to the P device 141 through the network port A, and is connected to the P device 142 through the network port B.

It is assumed that the PE device 132 has a public network routing table and a VPN routing table, and the public network routing table records a correspondence between an IP address of the CE device 124 and the network port B. The VPN routing table records a correspondence between the IP address of the CE device 121 and the network port A and a correspondence between the IP address of the CE device 122 and the network port A. In this case, when the terminal device 113 does not use the VPN, a destination address of a packet M sent by the terminal device 113 may be an IP address of the CE device 124. Because the packet M does not include a VPN identifier, the PE device 132 may determine, based on the public network routing table, that an egress port corresponding to a packet is the network port B, and send the packet to the P device 142 through the network port B, to forward the packet to the terminal device 114 by using the P device 142.

When the terminal device 113 accesses the terminal device 111 or the terminal device 112 via the VPN, a packet N sent by the terminal device 113 may include a VPN identifier, and a destination address of the packet may be an IP address of the CE device 121 or an IP address of the CE device 122. Correspondingly, after receiving the packet, the PE device 132 may determine, based on the VPN identifier carried in the packet, that the packet N needs to be transmitted via the VPN, and determines, that an egress port of the packet N needs to be obtained based on a VPN routing table. Then, the PE device 132 may determine, based on the VPN routing table and a destination address of the packet N, that an egress port corresponding to the packet N is the network port A, and send the packet N to the P device 141 through the network port A, so that the P device 141 forwards the packet N to the terminal device 111 or the terminal device 112. It can be seen that, by distinguishing the VPN routing table from the public network routing table, public network traffic is isolated from VPN traffic, which is equivalent to isolating a virtual private network from a public network.

The VPN routing table records IP addresses of a plurality of CE devices that are reachable in the VPN. Therefore, PE devices deployed with the VPN need to collect IP addresses of CE devices connected to the PE devices and connected to the VPN, and send the IP addresses to another PE device deployed with the VPN. For example, in the embodiment shown in FIG. 1, a VPN routing table of the PE device 132 records respective IP addresses of the CE device 121 and the CE device 122 that are reachable in a VPN. Therefore, when establishing the VPN routing table, the PE device 131 needs to collect the IP address of the CE device 121 and the IP address of the CE device 122, and send the two IP addresses to the PE device 132. In this way, the PE device 132 can establish a correspondence between the network port A and the IP address of the CE device 121 and the IP address of the CE device 122, to obtain the VPN routing table.

However, with expansion of a VPN scale, more and more IP addresses of CE devices are recorded in the VPN routing table, which greatly increases burden of PE devices. In addition, when a new CE device accesses the VPN, a PE device connected to the new CE device needs to advertise an IP address of a CE device to another PE device in the VPN, and the advertising process also increases burden of a network device.

To resolve the foregoing problem, an embodiment of this application provides a packet transmission method. A network device may add a global identifier to a packet based on a port for transmitting a packet, so that another network device verifies the packet based on the global identifier and the port for transmitting the packet. In this way, by establishing a correspondence between the global identifier and the port, a packet transmitted through a specific port may be isolated from another packet, which is equivalent to dividing a relatively independent private network from a public network. In this way, a VPN function is implemented without establishing a VPN routing table, and a PE device does not need to collect an IP address of a CE device, and a routing message does not need to be transmitted by using a protocol such as BGP, to reduce burden of a network device.

The packet transmission method provided in this embodiment of this application may be applied to the network architecture shown in FIG. 2.

FIG. 2 is a schematic diagram of a structure of a system 200 according to an embodiment of this application. The system 200 includes a device 211, a device 212, a device 213, a customer-premises equipment 221, a customer-premises equipment 222, a customer-premises equipment 223, a PE device 231, a PE device 232, and a P device 241. The customer-premises equipment 221 is separately connected to the device 211 and the PE device 231, the customer-premises equipment 222 is separately connected to the device 212 and the PE device 231, the customer-premises equipment 223 is separately connected to the device 213 and the PE device 232, and the P device 241 is separately connected to the PE device 231 and the PE device 232. Alternatively, the customer-premises equipment 221, the customer-premises equipment 222, the customer-premises equipment 223, the PE device 231, the PE device 232, and the P device 241 may belong to an overlay overlay network system.

In this embodiment of this application, the PE device 231 is connected to a network port A2 of the customer-premises equipment 221 through a network port A1, is connected to the customer-premises equipment 222 through a network port B2, and is connected to the network device 241 through a network port C. The PE device 232 is connected to the network device 241 through a network port D.

In this embodiment of this application, the device 211, the device 212, and the device 213 may be terminal devices, or may be devices such as a server or a database. The terminal device may also be referred to as user equipment (user equipment, UE), a mobile station (mobile station, MS), a mobile terminal (mobile terminal, MT), a terminal, or the like, and is a device that provides voice and/or data connectivity for a user, or a chip disposed in the device, for example, a handheld device or a vehicle-mounted device having a wireless connection function. Currently, some examples of the terminal device are a mobile phone, a desktop computer, a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a 5G-residential gateway (5G-residential gateway, 5G-RG) device, and the like.

The customer-premises equipment 221, the customer-premises equipment 222, the customer-premises equipment 233, the PE device 231, the PE device 232, and the P device 233 may be, for example, entity devices that support a routing function, such as a router (router) or a switch (switch), or may be a server on which a virtual router or a virtual switch is deployed which are configured to transmit a packet.

It should be noted that, in this embodiment of this application, a packet may be forwarded by one network device in a process of transmission between two PE device (as shown in FIG. 2, the PE device 231 and the PE device 232 are connected by using the P device 233.), may also be forwarded by a plurality of network devices, or may be directly transmitted from one PE device to another PE device through a tunnel. A process in which a packet is transmitted from one PE device to another PE device is not limited in this embodiment of this application.

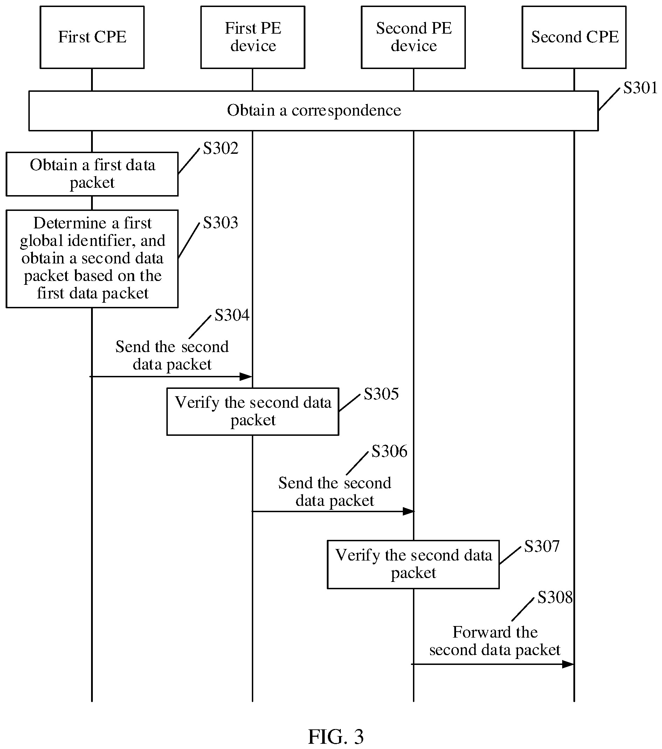

FIG. 3 is a signaling interaction diagram of a packet transmission method according to an embodiment of this application. The packet transmission method provided in this embodiment of this application may include the following steps.

S301: A first CPE, a first PE device, a second PE device, and a second CPE each obtain a correspondence.

In this embodiment of this application, the first CPE, the first PE device, the second PE device, and the second CPE each are a device on which a private network is deployed, and the private network is referred to as a target network. It should be noted that the target network is not a virtual private network implemented by using a VPN routing table in a conventional sense, or a private network that is implemented by using hardware and that is physically isolated from a public network. Instead, the target network is a virtual private network established by performing the packet transmission method provided in this embodiment of this application.

The first CPE is separately connected to the first PE device and a first terminal device, and the second CPE is separately connected to the second PE device and a second terminal device. In this way, a packet from the first terminal device may be sent to the second terminal device via the target network. In a transmission process, the packet successively passes through the first CPE, the first PE device, the second PE device, and the second CPE. The embodiment shown in FIG. 2 is used as an example for description. If the first terminal device is the device 211, and the second terminal device is the device 213, the first CPE may be the customer-premises equipment 221, the second CPE may be the customer-premises equipment 223, the first PE device may be the PE device 231, and the second PE device may be the PE device 232. In some possible implementations, the first CPE, the first PE device, the second PE device, and the second CPE may belong to an overlay (overlay) network system.

Before transmitting a data packet, the first CPE, the first PE device, the second PE device, and the second CPE each may obtain the correspondence. The correspondence may include a correspondence between a network port and a global identifier, and/or a correspondence between a packet characteristic and the global identifier. The global identifier identifies the target network, and is used to distinguish between a data packet transmitted via the target network and a data packet transmitted via the public network. Alternatively, the global identifier may include any one or more of a slice ID, a VNID, and a preset identifier.

In this embodiment of this application, the network port is a port for connecting a device to another device, and may be classified into an egress port and an ingress port. The ingress port is a network port through which the device receives a data packet, and the egress port is a network port through which the device sends a data packet. Correspondingly, the correspondence may be classified into a correspondence between the egress port and the global identifier, and a correspondence between the ingress port and the global identifier. The correspondence between the egress port and the global identifier indicates a condition satisfied by a packet sent through the egress port. The correspondence between the ingress port and the global identifier indicates a condition satisfied by a packet received through the ingress port. For detailed descriptions of the correspondence, refer to the following descriptions of S305. Details are not described herein.

In this embodiment of this application, the correspondence may be obtained based on a connection relationship between devices, and indicates a network port that is bound to the target network. Specifically, in a process of deploying a target network between the first CPE and the second CPE, a network port that data transmitted in the target network needs to pass through may be first determined, and then a correspondence between the network port and a global identifier may be established. Therefore, because the target network is deployed between the first CPE and the second CPE, and passes through the first PE device, the second PE device, and the second CPE device, the correspondence may include a correspondence between an egress port that is connected to the first PE device and that is in a network port of the first CPE and a global identifier, a correspondence between an ingress port that is connected to the first CPE and that is in the network port of the first PE device and a global identifier, a correspondence between an egress port that is connected to second PE device and that is in the network port of the first PE device and a global identifier, a correspondence between an ingress port that is connected to the first PE device and that is in a network port of the second PE device and a global identifier, and a correspondence between an egress port that is connected to the second CPE and that is in the network port of the second PE device and a global identifier, and a correspondence between an ingress port that is connected to the second PE device and that is in a network port of the second CPE and a global identifier.

FIG. 2 is still used as an example for description. It is assumed that the first CPE is the customer-premises equipment 221, the second CPE is the customer-premises equipment 223, the first PE device is the PE device 231, the second PE device is the PE device 232, and the global identifier is X. Therefore, when a target network between the customer-premises equipment 221 and the customer-premises equipment 223 is established, it may be determined that a data packet from the customer-premises equipment 211 may successively pass through the network port A2, the network port A1, the network port C, and the network port D. Therefore, a correspondence between the global identifier X and the network port A2, a correspondence between the global identifier X and the network port A1, a correspondence between the global identifier X and the network port C, and a correspondence between the global identifier X and the network port D may be established.

After the correspondences between network ports and the global identifier are determined, the correspondences may be separately sent to the first CPE, the first PE device, the second PE device, and the second CPE by using a control device. It should be noted that a control device corresponding to the PE device and a control device corresponding to the CPE may be different. For example, for the first CPE and the second CPE, the control device may include, for example, an SD-WAN controller.

S302: The first CPE obtains a first data packet.

In this embodiment of this application, the first data packet may be a service packet generated by a terminal device or a server. The terminal device or the server that generates the first data packet is directly connected to the first CPE. The first CPE may obtain the first data packet through a connection to the terminal device or the server.

A destination device of the first data packet is a terminal device connected to the second CPE. For example, it is assumed that the first CPE is the customer-premises equipment 221 in FIG. 2. In this case, a device that generates the first data packet may be the device 211, and the destination device of the first data packet may be the device 213. Alternatively, the first data packet may include a destination address, indicating a location of the destination device of the first data packet in a network. It can be learned from the foregoing descriptions that the target network is deployed between the first CPE and the second CPE, and in this case, the first data packet may be a data packet transmitted via the target network.

S303: The first CPE determines a global identifier, and obtains a second data packet based on the first data packet and the global identifier.

It can be learned from the foregoing descriptions that the correspondence obtained by the first CPE in step S301 may include the correspondence between the global identifier and an egress port, and/or the correspondence between the packet characteristic and the global identifier. In this embodiment of this application, the first CPE may determine the global identifier based on the correspondence after obtaining the first data packet.

It can be learned from the foregoing descriptions that the correspondence may be the correspondence between the network port and the global identifier, or may be the correspondence between the packet characteristic and the global identifier. The following describes the two cases.

In a first possible implementation, the correspondence may include the correspondence between the network port and the global identifier. In other words, the first CPE may determine, based on the network port and the correspondence, the global identifier corresponding to the first data packet. Specifically, the first CPE may determine an egress port corresponding to the first data packet first, and then determine the global identifier based on the egress port corresponding to the first data packet and the correspondence. The egress port is a network port that corresponds to the first data packet and that is in the network port of the first CPE.

It can be learned from the foregoing descriptions that the first data packet may include the destination address. In this case, the first CPE may determine, based on a public network routing table and the destination address, the egress port corresponding to the first data packet. The public network routing table includes a correspondence between an address of at least one network device and an egress port of the first device CPE, the correspondence indicates an egress port that is of the first CPE and that needs to be used to send a packet to a network device. After receiving the first data packet, the first CPE may search the public network routing table for an egress port matching the destination address of the first data packet, and determine the egress port as the egress port corresponding to the first data packet.

After determining the egress port corresponding to the first data packet, the first CPE may determine, based on the correspondence between the egress port and the global identifier, the global identifier corresponding to the egress port. The correspondence between the egress port and the global identifier includes a correspondence between the egress port corresponding to the first data packet and the global identifier, indicating that data carried in the target network corresponding to the global identifier needs to be transmitted through the egress port.

In a second possible implementation, the correspondence may include the correspondence between the packet characteristic and the global identifier. In other words, the first CPE may determine the global identifier based on a packet characteristic of the first data packet and the correspondence. The packet characteristic is an attribute of the first data packet, for example, may be a feature of the first data packet such as a flow identifier or a quintuplet. The quintuplet includes a source IP address, a source port, a destination IP address, a destination port, and a transport layer protocol of the first data packet. The source port is a port through which the terminal device that generates the first data packet sends the first data packet, and the destination port is a port through which the destination device of the first data packet receives the first data packet. An example is used for description. It is assumed that the correspondence includes a correspondence between a destination IP address and the global identifier. After the first CPE receives the first data packet, if the destination IP address of the first data packet is the same as the destination IP address included in the correspondence, the first CPE may determine, based on the correspondence, the global identifier corresponding to the destination IP address.

After determining the first data packet, the first CPE may obtain the second data packet based on the first data packet and the global identifier. The second data packet includes the global identifier. For example, the first CPE may add the global identifier to a packet header of the first data packet, to obtain the second data packet including the global identifier.

In some possible implementations, the second data packet may be an IPv6 packet, and the global identifier may be carried in an IPv6 packet header of the second data packet. For example, the global identifier may be carried in a flow label (flow label) field and/or a destination address (destination address) field of the IPv6 header of the second data packet. Certainly, the global identifier may alternatively be carried in an extension header of the second data packet, for example, may be carried in a DOH and/or an HBH of the second data packet. Alternatively, the first CPE may include a plurality of global identifiers in the second data packet. For example, the first CPE may carry a global identifier in the IPv6 header of the second data packet, and also carry a global identifier in a DOH header of the first data packet.

In some other possible implementations, the second data packet may alternatively be an MPLS packet, and the global identifier may be carried in a basic header of the second data packet. For example, the global identifier may be carried in an MPLS label field and/or an entropy label (Entropy Label) field of the basic header of the second data packet.

S304: The first CPE sends the second data packet to the first PE device.

After obtaining the second data packet, the first CPE may send the second data packet to the first PE device. Specifically, the first CPE may determine, based on the destination address of the first data packet, that a next-hop device of the second data packet is the first PE device, and determine an egress port for sending the second data packet, to send the second data packet to the first PE device through the egress port. For detailed descriptions of determining the egress port, refer to the foregoing descriptions. Details are not described herein again.

S305: The first PE device verifies the second data packet.

After receiving the second data packet sent by the first CPE, the first PE device may verify the second data packet based on the global identifier carried in the second data packet. In this embodiment of this application, the first PE device may determine the egress port for sending the second data packet first, and then verify the second data packet based on the egress port for sending the second data packet.

In a process of verifying the second data packet based on the egress port for receiving the second data packet, the first PE device may determine the egress port based on a destination address of the second data packet first, and then determine a global identifier based on the egress port for sending the second data packet, and finally, determine whether the global identifier carried in the first data packet matches the global identifier determined based on the egress port.

It can be learned from the descriptions in S301 that, when deploying the target network, the control device may generate the correspondence between the egress port of the first PE device and the global identifier, to indicate that a packet sent by the first PE device through the egress port is a packet transmitted via the target network. Therefore, after determining the egress port for sending the first data packet, the first PE device may learn, based on the egress port, that the data packet is a packet transmitted via the target network, and determine, based on the correspondence, the global identifier corresponding to the egress port. After determining the global identifier corresponding to the egress port, the first PE device may compare whether the global identifier corresponding to the egress port matches the global identifier carried in the second data packet. If the global identifier corresponding to the egress port matches the global identifier carried in the second data packet, it indicates that the second data packet may be output from the egress port, to implement forwarding in the target network.

However, if the data packet to be sent by the first PE device does not include the global identifier, or the global identifier carried in the data packet does not match the global identifier determined based on the egress port, even if the destination address of the data packet corresponds to the egress port, the data packet does not meet a condition for sending through the egress port. The first PE device may discard the data packet.

FIG. 2 is still used as an example for description. It is assumed that the first PE device is the PE device 231, the first CPE is the customer-premises equipment 221, the target network corresponds to the global identifier X, and the second data packet is a packet sent by the terminal device 211 to the terminal device 213. Because the customer-premises equipment 221 and the customer-premises equipment 223 are connected via the target network, both the network port A2 and the network port C correspond to the global identifier X. In this case, the second data packet received by the PE device 231 may include the global identifier X that is determined and added by the customer-premises equipment 221 based on the network port A2.

After receiving the second data packet, the PE device 231 may determine, based on the destination address of the second data packet, that the egress port corresponding to the second data packet is the network port C, and determine, based on the correspondence, that a global identifier corresponding to the network port C is the global identifier X. Then, the PE device 231 may determine that the global identifier X determined based on the network port C matches the global identifier X carried in the second data packet, so that the second data packet is a secure data packet. If the PE device 231 receives a packet whose destination device is the terminal device 213, and the packet does not include the global identifier X, the PE device may determine that the packet is insecure, and discard the packet.

It can be learned that, in the data transmission method provided in this embodiment of this application, before sending the second data packet, the first PE device may verify the second data packet based on the egress port of the sent packet. In this way, if the egress port for sending the second data packet is bound to the target network, the PE device may verify the second data packet based on the global identifier corresponding to the target network, to ensure that a packet sent through the egress port is a packet having the global identifier corresponding to the target network. In this way, only a specific packet can be sent through the egress port bound to the target network, to isolate the target network from the public network.

In some possible implementations, after receiving the second data packet, the first PE device may alternatively verify the second data packet based on an ingress port for receiving the second data packet. Specifically, after receiving the second data packet, the first PE device may determine, based on the ingress port for receiving the second data packet and the correspondence, a global identifier corresponding to the ingress port of the second data packet, and compares whether the global identifier determined based on the ingress port matches the global identifier carried in the first data packet.

It can be learned from the descriptions in S301 that, when deploying the target network, the control device may generate the correspondence between the ingress port of the first PE device and the global identifier, to indicate that a packet received by the first PE device through the ingress port is transmitted via the target network corresponding to the global identifier. Therefore, after receiving the data packet through the ingress port, the first PE device may learn, based on the ingress port for receiving the data packet, that the data packet is a packet transmitted via the target network, and determine, based on the correspondence, the global identifier corresponding to the ingress port. After determining the global identifier corresponding to the ingress port, the first PE device may compare whether the global identifier determined based on the ingress port matches the global identifier carried in the second data packet. If the global identifier determined based on the ingress port matches the global identifier carried in the second data packet, it indicates that the second data packet is secure, and subsequent steps may continue to be performed.

That the data packet received by the first PE device is the second data packet sent by the first CPE is used as an example. Because the network port A2 of the first CPE is connected to the network port A1 of the first PE device, and both the network port A2 and the network port A1 correspond to the target network, in this case, a global identifier corresponding to the network port A1 is the same as a global identifier corresponding to the network portA2. Therefore, the first PE device may determine that the global identifier carried in the second data packet matches the global identifier determined based on the ingress port of the second data packet. It indicates that the second data packet is a normal data packet, and subsequent steps may continue to be performed. Alternatively, after the verification performed on the second data packet based on the ingress port succeeds, the first PE device may determine the egress port based on a destination address of the second data packet, and verify the second data packet again based on the egress port.

However, if the data packet received by the first PE device does not include the global identifier, or the global identifier carried in the data packet received by the first PE device does not match the global identifier corresponding to the ingress port, it indicates that the first PE device receives an incorrect packet from the ingress port corresponding to the global identifier. In this case, the first PE device may discard the packet. For example, it is assumed that the second data packet is tampered with in a transmission process. Consequently, the global identifier carried in the second data packet is deleted. In this case, because the tampered second data packet does not include the global identifier, the first PE device may discard the tampered second data packet, to avoid continuing transmission of an insecure packet.

FIG. 2 is still used as an example for description. It is assumed that the first PE device is the PE device 231, the first CPE is the customer-premises equipment 221, the target network corresponds to the global identifier X, and the second data packet is a packet sent by the terminal device 211 to the terminal device 213. Because the customer-premises equipment 221 and the customer-premises equipment 223 are connected via the target network, both the network port A1 and the network port A2 correspond to the global identifier X. The second data packet received by the PE device 231 includes the global identifier X that is determined and added by the customer-premises equipment 221 based on the network port A2. In addition, the PE device 231 may determine the global identifier X based on the network port A1 for receiving the second data packet and the correspondence, and determine that the global identifier X determined based on the network port A1 matches the global identifier X carried in the second data packet, so that the second data packet is a secure data packet. If the PE device 231 receives, through a network port B 1, a data packet that carries the global identifier X, because there is no correspondence between the network port Bl and the global identifier X, the PE device 231 cannot obtain the global identifier X through the network port B1. Based on this, the PE device 231 may determine that the data packet is an insecure data packet, to discard the data packet.

S306: The first PE device sends the second data packet to the second PE device.

After the verification performed by the first PE device on the second data packet succeeds, the first PE device determines that the second data packet is a secure packet, to continue to send the second data packet. Specifically, the first PE device may determine, based on the destination address of the second data packet, the egress port for sending the second data packet, to send the packet to a next-hop (next-hop) device through the egress port. For the descriptions of determining the egress port, refer to the foregoing descriptions. Details are not described herein again.

After forwarding by one or more network devices in the network system, the second data packet sent by the first PE device may reach the second PE device. For example, in the embodiment shown in FIG. 2, the second data packet sent by the PE device 231 may be forwarded by the network device 241, and received by the PE device 232 through the network port D. Certainly, in some possible implementations, the first PE device may be directly connected to the second PE device. In this case, the next-hop device of the second data packet sent by the first PE device is the second PE device, the first PE device may directly send the second data packet to the second PE device, and the second data packet is forwarded by another network device in the network system. Alternatively, the first PE device may send the second data packet to the second PE device through a tunnel between the first PE device and the second PE device.

S307: The second PE device verifies the second data packet.

After receiving the second data packet sent by the first PE device, the second PE device may verify the second data packet based on the global identifier carried in the second data packet. Alternatively, the second PE device may determine, based on an egress port to be used for sending the second data packet and/or an ingress port for receiving the second data packet, a global identifier corresponding to the second data packet, to determine whether the global identifier matches the second data packet carried in the second data packet. A method for determining the global identifier by the second PE device is similar to the method for determining the global identifier by the first PE device based on the ingress port or the egress port in S305. Details are not described herein again.

S308: The second PE device forwards the second data packet to the second CPE.

If a result of the verification performed by the second PE device on the second data packet is that the verification fails, it indicates that the second data packet does not correspond to the target network for transmitting the second data packet, and the second data packet cannot be sent to a next-hop device through an egress port corresponding to the destination address. The second PE device may discard the second data packet. If a result of the verification performed by the second PE device on the second data packet is that the verification succeeds, the second PE device may determine an egress port based on the destination address of the second data packet, to forward the second data packet through the egress port.

In some possible implementations, before forwarding the second data packet to the second CPE, the second PE device may adjust the second PE device. For example, the second PE device may remove some packet headers of the second data packet, and then send the adjusted second data packet to the second CPE.

It can be learned from the foregoing descriptions that the target network is deployed between the first CPE and the second CPE, the target network passes through the first PE device and the second PE device, and corresponds to the global identifier. A destination device of the second data packet is a terminal device connected to the second CPE. In this case, the egress port determined based on the destination address of the second data packet is a network port that is in the network ports of the second PE device and that is connected to the second CPE. Therefore, the next-hop device of the egress port determined based on the destination address of the second data packet is the second CPE, and the second PE device may send the second data packet to the second CPE through the egress port.

After receiving the second data packet, the second CPE may verify the second data packet based on the correspondence and the ingress port for receiving the second data packet. The verify process is similar to the foregoing process in which the first PE device and the second PE device verify the second data packet, and details are not described herein again. After the verification on the second data packet succeeds, the second CPE may forward the second data packet to a destination device of the second data packet, to complete packet transmission.

Alternatively, the packet sent by the second CPE to the destination device may be referred to as a third data packet. Before sending the third data packet, the second CPE may remove the global identifier carried in the second data packet first, to obtain the third data packet.

It can be learned from the foregoing description that the control device may deploy a correspondence between a global identifier and a network port on the CPE or the PE device, and the global identifier is for verifying a data packet transmitted via the target network, which is equivalent to binding a network port of the CPE or the PE device to a target network. In a process of transmitting a data packet, when an egress port corresponding to a destination address of the data packet is a network port to which a target network is bound, the CPE that receives the data packet for the first time in the network architecture may add, to the data packet, a global identifier corresponding to the target network, so that the first PE device, the second PE device, and the second CPE device that transmit the packet verify the data packet based on the global identifier. If the CPE or the PE device receives the data packet through the ingress port bound to the target network, the CPE or the PE device may verify the data packet based on the global identifier carried in the data packet. If the egress port corresponding to the destination address of the data packet is an egress port bound to the target network, the CPE or the PE device may verify the data packet based on the global identifier. It can be seen that, on the one hand, a data packet having a global identifier may be received by the CPE and the PE device through an ingress port bound to the target network, and a data packet having no a global identifier may not be received by the CPE and the PE device through an ingress port bound to the target network. On the other hand, a data packet having a global identifier may be sent by the CPE and the PE device through an egress port bound to the target network, and a data packet having no a global identifier is not sent through an egress port bound to the target network. In this way, the network port bound with the target network can only be used to transmit a packet transmitted by using the target network, and another packet in the public network cannot be transmitted through the network port bound with the target network. In this way, target network traffic is isolated from public network traffic without establishing a VPN routing table, which is equivalent to establishing a logically independent target network on the public network. Because the method provided in this embodiment of this application does not need to establish the VPN routing table, the PE device does not need to advertise, to another PE device in the VPN, an IP address of a CE device connected to the PE device, and the burden of the network device is reduced.

In the foregoing embodiment, the global identifier is added to the first data packet by the first CPE. However, in some other possible implementations, a global identifier may be added to the first data packet by a PE device (for example, the foregoing first PE device) that receives the first data packet for the first time in the network architecture. The following describes this case in detail.

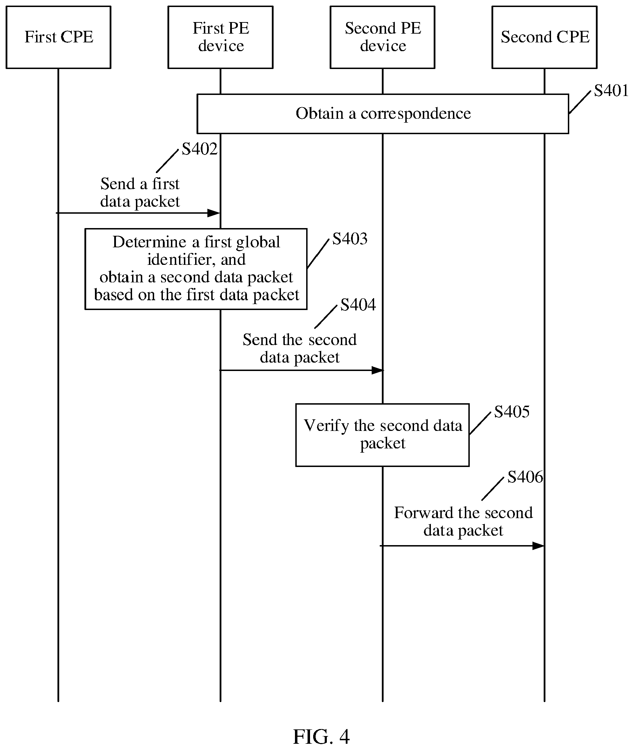

FIG. 4 is another signaling interaction diagram of a packet transmission method according to an embodiment of this application. The packet transmission method provided in this embodiment of this application may include the following steps.

S401: A first PE device, a second PE device, and a second CPE each obtain a correspondence.

In this embodiment of this embodiment, the first PE device, the second PE device, and the second CPE each may obtain the correspondence, and the correspondence is a correspondence between a global identifier of a private network and a network port. A network port included in the correspondence is a network port bound to a private network. In other words, a packet transmitted through the network port of the private network may be transmitted through the network port included in the correspondence.

It can be learned from the foregoing description that the network port may include an egress port and an ingress port. In this embodiment, the correspondence obtained by the first PE device includes at least a correspondence between an ingress port of the first device and the global identifier. When determining the correspondence between the ingress port of the first PE device and the global identifier, the ingress port may be first determined based on a network topology, and the ingress port is a network port through which the first PE device receives the data packet transmitted in the private network corresponding to the global identifier. For example, a network port connecting the first PE device to the first CPE may be determined as an ingress port, and a connection relationship between the ingress port and the global identifier may be established.

S402: The first CPE obtains a first data packet, and sends the first data packet to the first PE device.

In this embodiment of this application, the first CPE may obtain the first data packet from the device that generates the first data packet, and forward the first data packet to the first PE device. It is similar to the embodiment shown in FIG. 3. The first data packet is a data packet that needs to be transmitted by using a private network (referred to as a target network) corresponding to the global identifier.

In this embodiment, after obtaining the first data packet, the first CPE may determine an egress port based on the destination address of the first data packet, to send the first data packet to the first PE device through the egress port.

S403: The first PE device determines a global identifier, and obtains a second data packet based on the first data packet and the global identifier.

After receiving the first data packet, the first PE device may determine the global identifier based on the correspondence obtained in S401. It can be learned from the foregoing description that the correspondence obtained by the first PE device may include a correspondence between an ingress port and a global identifier. If the first PE device receives the first data packet through the ingress port recorded in the correspondence, it indicates that the first data packet is a data packet that needs to be transmitted via the target network. In this case, the first PE device may determine, based on the correspondence, the global identifier corresponding to the ingress port, and add the global identifier to the first data packet to obtain the second data packet.

In this embodiment, a location carried in the second data packet may be the same as that in the embodiment shown in FIG. 3. Details are not described herein again.

S404: The first PE device sends the second data packet to the second PE device.

After obtaining the second data packet, the first device may determine, based on the destination address of the second data packet, an egress port for sending the second data packet, to send the second data packet to the second PE device through the egress port.

Because the target network is a private network deployed between the first CPE and the second CPE, all data packets sent from the first CPE to the second CPE are transmitted via the target network. Therefore, all paths from the first CPE to the second CPE belong to paths in the target network. The second data packet is transmitted by using one or more network devices on the path, and the second data packet may reach the second PE device.

S405: The second PE device verifies the second data packet.

After receiving the second data packet, the second PE device may verify the second data packet based on the global identifier. For descriptions of this part of content, refer to descriptions of S305 and S307 in the embodiment shown in FIG. 3. Details are not described herein again.

S406: The second PE device forwards the second data packet to the second CPE.

After the verification performed by the second PE device on the second data packet succeeds, the second PE device may send the second data packet to the second CPE, and the second CPE forwards the second data packet to the target device, to complete a data packet transmission process.

It can be learned that, in this embodiment, a first PE device that receives the first data packet for the first time in the devices that obtain the correspondence adds a global identifier to the first data packet, so that a device that subsequently transmits the second data packet can verify the second data packet based on the global identifier. In this way, packets can be normally transmitted in the target network, and the target network is not interfered by other packets. In this way, target network traffic is isolated from public network traffic without establishing a VPN routing table, which is equivalent to establishing a logically independent target network on the public network. Because the method used in this embodiment of this application does not need to establish the VPN routing table, the PE device does not need to advertise, to another PE device in the VPN, an IP address of a CE device connected to the PE device, and the burden of the network device is reduced.

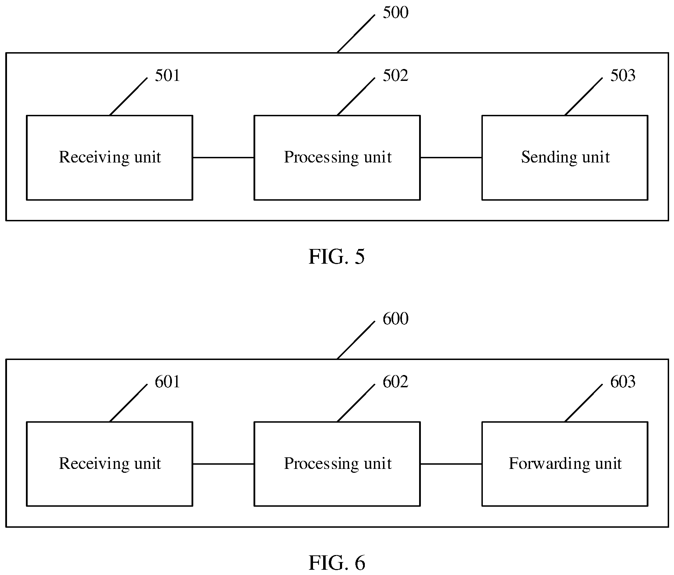

Refer to FIG. 5. An embodiment of this application further provides a packet transmission apparatus 500. The model establishment apparatus 500 may implement a function of the first CPE in the embodiment shown in FIG. 3, or implement a function of the first PE device in the embodiment shown in FIG. 4. The packet transmission apparatus 500 includes a receiving unit 501, a processing unit 502, and a sending unit 503. The receiving unit 501 is configured to implement S301 and S302 in the embodiment shown in FIG. 3, or is configured to implement S401 in the embodiment shown in FIG. 4, and receive the first data packet sent by the first CPE. The processing unit 502 is configured to implement S303 in the embodiment shown in FIG. 3, or is configured to implement S403 in the embodiment shown in FIG. 4. The sending unit 503 is configured to implement S304 in the embodiment shown in FIG. 3, or is configured to implement S404 in the embodiment shown in FIG. 4.

Specifically, the receiving unit 501 is configured to receive the first data packet.

The processing unit 502 is configured to update the first data packet to obtain a second data packet, and the second data packet includes a global identifier.

The sending unit 503 is configured to send the second data packet to the second network device, where the global identifier is used by the second network device to verify the second data packet based on a correspondence, and the correspondence is a correspondence between the global identifier and a second egress port through which the second network device transmits the second data packet.

For a specific execution process, refer to detailed descriptions of corresponding steps in the embodiment shown in FIG. 3 or in FIG. 4, and details are not described herein again.

Refer to FIG. 6. An embodiment of this application further provides a packet transmission apparatus 600. The packet transmission apparatus 600 may implement functions of the first PE device and the second PE device in the embodiment shown in FIG. 3, or implement a function of the second PE device in the embodiment shown in FIG. 4. The packet transmission apparatus 600 includes a receiving unit 601, a processing unit 602, and a sending unit 603. The receiving unit 601 is configured to implement S301 and receives the second data packet in the embodiment shown in FIG. 3, or is configured to implement S401 and receive the second data packet in the embodiment shown in FIG. 4. The processing unit 602 is configured to implement S305 or S307 in the embodiment shown in FIG. 3, or is configured to implement S405 in the embodiment shown in FIG. 4. The forwarding unit 603 is configured to implement S306 or S308 in the embodiment shown in FIG. 3, or is configured to implement S406 in the embodiment shown in FIG. 4.

Specifically, the receiving unit 601 is configured to receive a second data packet from a first network device, and the second data packet includes a first global identifier.

The processing unit 602 is configured to determine, based on a correspondence between an egress port for sending the second data packet and a second global identifier, the second global identifier corresponding to the egress port.

The forwarding unit 603 is configured to: the second network device forwards the second data packet based on the egress port in response to a match between the first global identifier and the second global identifier.

For a specific execution process, refer to detailed descriptions of corresponding steps in the embodiment shown in FIG. 3 or in FIG. 4, and details are not described herein again.

It should be noted that unit division in embodiments of this application is an example, and is merely logical function division. During actual implementation, there may be another division manner. Functional units in embodiments of this application may be integrated into one processing unit, or each of the units may exist alone physically, or two or more units are integrated into one unit. For example, in the foregoing embodiment, the obtaining unit and the processing unit may be a same unit or different units. The integrated unit may be implemented in a form of hardware, or may be implemented in a form of a software functional unit.

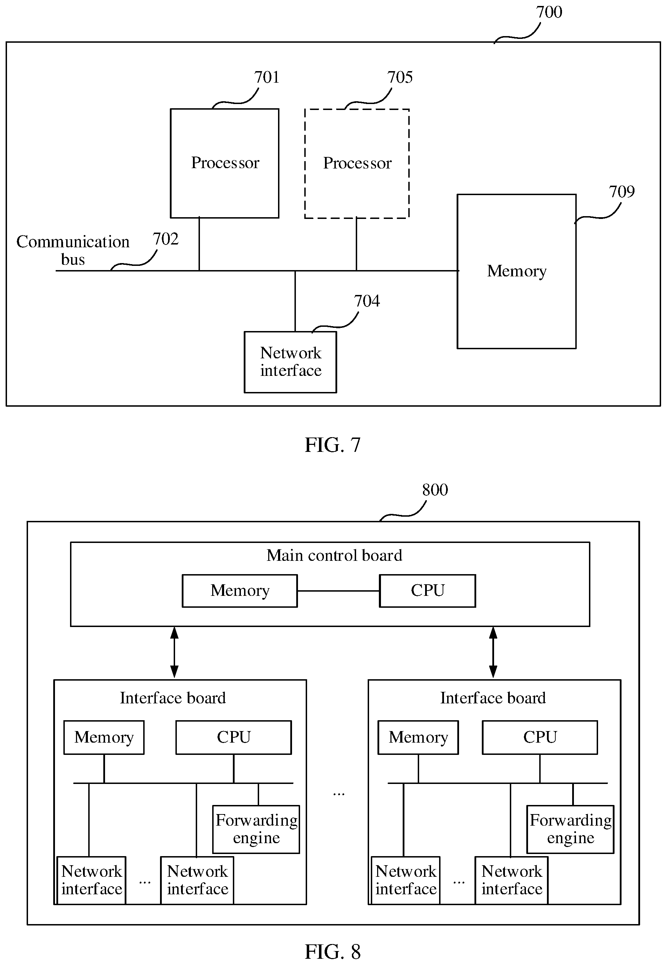

FIG. 7 is a schematic diagram of a structure of a device 700 according to an embodiment of this application. The foregoing packet transmission apparatus 500 or the packet transmission apparatus 600 may be implemented by using devices shown in FIG. 7. Refer to FIG. 7. The device 700 includes at least one processor 701, a communication bus 702, and at least one network interface 704. Alternatively, the device 700 may further include a memory 703.

The processor 701 may be a central processing unit (central processing unit, CPU), a network processor (network processor, NP), or a combination of a CPU and an NP. In an implementation, the processor 101 may further be a traffic management (traffic management, TM) chip or hardware that integrates an NP and a TM chip. The TM chip or the hardware that integrates the NP and the TM chip may perform the method for queue scheduling provided in embodiments of this application on a queue in the TM chip. The processor 1010 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof. The processor may be configured to update or verify a data packet, to implement the packet transmission method provided in embodiments of this application.

For example, when the first CPE in FIG. 3 or the first PE device in FIG. 4 is implemented by using the device shown in FIG. 7, the processor may be configured to receive a first data packet, update the first data packet to obtain a second data packet, and the second data packet includes a global identifier; the second data packet is sent to a second network device, where the global identifier is used by the second network device to verify the second data packet based on a correspondence, and the correspondence is a correspondence between the global identifier and an egress port through which the second network device transmits the second data packet. When any one of devices of the first PE device in FIG. 3, the second PE device in FIG. 3, and the second PE device in FIG. 4 is implemented by using the device shown in FIG. 7, the processor may be configured to receive a second data packet from the first network device, and the second data packet includes a first global identifier; the processor determines, based on a correspondence between an egress port for sending the second data packet and a second global identifier, the second global identifier corresponding to the egress port; and the processor forwards the second data packet based on the egress port in response to a match between the first global identifier and the second global identifier.

The communication bus 702 is configured to transmit information among the processor 701, the network interface 704, and the memory 703. The bus system 702 may be a peripheral component interconnect (peripheral component interconnect, PCI) bus, or an extended industry standard architecture (extended industry standard architecture, EISA) bus. The bus system 702 may be classified into an address bus, a data bus, and a control bus. In FIG. 7, only one thick line is used for representation, but it does not indicate that there is only one bus or only one type of bus.

The memory 703 may be a read-only memory (read-only memory, ROM) or another type of static storage device that may store static information and instructions. The memory 703 may alternatively be a random access memory (random access memory, RAM) or another type of dynamic storage device that may store information and instructions, or may be a compact disc read-only memory (compact disc read-only Memory, CD-ROM) or another optical disc storage, an optical disc storage (including a compact disc, a laser disc, an optical disc, a digital versatile optical disc, a Blu-ray disc, and the like), a magnetic disk storage medium or another magnetic storage device, or any other medium that can be configured to carry or store expected program code in a form of an instruction or a data structure and can be accessed by a computer. However, the memory is not limited thereto. The memory 703 may exist independently, and is connected to the processor 701 by using the communication bus 702. The memory 703 may alternatively be integrated with the processor 701.

Alternatively, the memory 703 is configured to store program code or instructions for executing the solution of this application, and the processor 701 controls execution. The processor 701 is configured to execute the program code or the instructions stored in the memory 703. The program code may include one or more software modules. Alternatively, the processor 701 may alternatively store program code or instructions for executing the solution of this application. In this case, the processor 701 does not need to read the program code or the instructions from the memory 703.

The network interface 704 may be an apparatus such as a transceiver, and is configured to communicate with another device or a communication network. The communication network may be an Ethernet, a radio access network (RAN), a wireless local area network (wireless local area network, WLAN), or the like. In this embodiment of this application, the network interface 704 may be configured to receive a packet sent by another node in the segment routing network, or may send a packet to another node in a segment routing network. The network interface 704 may be an Ethernet interface (Ethernet) interface, a fast Ethernet (fast Ethernet, FE) interface, a gigabit Ethernet (gigabit Ethernet, GE) interface, or the like.

During specific implementation, in an embodiment, the device 700 may include a plurality of processors, for example, the processor 701 and a processor 407 in FIG. 7. Each of the processors may be a single-CPU (single-CPU), or may be a multi-CPU (multi-CPU). The processor herein may refer to one or more devices, circuits, and/or processing cores configured to process data (for example, computer program instructions).

FIG. 8 is a schematic diagram of a structure of a device 800 according to an embodiment of this application. Any one or more of devices of the first CPE, the first PE device, the second PE device, and the second CPE in FIG. 3 or FIG. 4 may be implemented by using the device shown in FIG. 8.

Refer to the schematic diagram of the structure of the device shown in FIG. 8. The device 800 includes a main control board and one or more interface boards. The main control board communicates with the interface board. The main control board is also referred to as a main processing unit (main processing unit, MPU) or a route processor card (route processor card). The main control board includes a CPU and a memory, and is responsible for controlling and managing each component in the device 800, including functions of route calculation and device management and maintenance. The interface board is also referred to as a line processing unit (line processing unit, LPU) or a line card (line card), and is configured to receive and send packets. In some embodiments, the main control board communicates with the interface board through a bus, or the interface boards communicate with each other through a bus. In some embodiments, the interface boards communicate with each other through a switching board. In this case, the device 800 also includes the switching board. The switching board is communicatively connected to the main control board and the interface boards, and is configured to forward data between the interface boards. The switching board may also be referred to as a switch fabric unit (switch fabric unit, SFU). The interface board includes a CPU, a memory, a forwarding engine, and an interface card (interface card, IC). The interface card may include one or more network interfaces. The network interface may be an Ethernet interface, an FE interface, a GE interface, or the like. The CPU is communicatively connected to the memory, the forwarding engine, and the interface card. The memory is configured to store a forwarding table. The forwarding engine is configured to forward a received packet based on the forwarding table stored in the memory. If a destination address of the received packet is an IP address of the device 700, the forwarding engine sends the packet to the CPU of the main control board or the CPU of the interface board for processing. If a destination address of the received packet is not an IP address of the device 800, the forwarding engine searches the forwarding table based on the destination address. If a next-hop and an outbound interface that correspond to the destination address are found from the forwarding table, the forwarding engine forwards the packet to the outbound interface corresponding to the destination address. The forwarding engine may be a network processor (network processor, NP). The interface card, also referred to as a subcard, may be installed on the interface board. The interface card is responsible for converting an optical/electrical signal into a data frame, verifying validity of the data frame, and forwarding the data frame to the forwarding engine for processing or the CPU of the interface board. In some embodiments, the CPU may also perform functions of the forwarding engine, such as implementing software forwarding based on a general-purpose CPU. Therefore, the interface board does not need the forwarding engine. In some embodiments, the forwarding engine may be implemented by using an ASIC or a field programmable gate array (field programmable gate array, FPGA). In some embodiments, the memory that stores the forwarding table may alternatively be integrated into the forwarding engine, and is used as a part of the forwarding engine.

An embodiment of this application further provides a chip system, including a processor, where the processor is coupled to a memory, the memory is configured to store a program or instructions. When the program or the instructions are/is executed by the processor, the chip system is enabled to implement the packet transmission method provided in the embodiment shown in FIG. 3 or FIG. 4.

Alternatively, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Alternatively, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

For example, the chip system may be an FPGA, an ASIC, a system on chip (system on chip, SoC), a CPU, an NP, a digital signal processor (digital signal processor, DSP), a micro controller unit (micro controller unit, MCU), a programmable logic device (programmable logic device, PLD), or another integrated chip.

It should be understood that the steps in the foregoing method embodiments may be completed by using a hardware integrated logic circuit or instructions in a form of software in the processor. The steps of the methods disclosed with reference to embodiments of this application may be directly performed by a hardware processor, or may be performed by a combination of hardware in the processor and a software module.

An embodiment of this application further provides a computer-readable storage medium, including instructions. When the instructions are run on a computer, the computer is enabled to perform the packet transmission method that is provided in the foregoing method embodiments and that is performed by any one of devices of the first CPE, the first PE device, the second PE device, and the second CPE.

An embodiment of this application further provides a computer program product including instructions. When the instructions are run on a computer, the computer is enabled to perform the packet transmission method that is provided in the foregoing method embodiments and that is performed by any one of devices of the first CPE, the first PE device, the second PE device, and the second CPE.

In the specification, claims, and accompanying drawings of this application, the terms "first", "second", "third", "fourth", and the like (if used) are intended to distinguish between similar objects but do not necessarily indicate a specific order or sequence. It should be understood that the data termed in such a way are interchangeable in proper circumstances so that embodiments of the present invention described herein can be implemented in other orders than the order illustrated or described herein. In addition, the terms "include", "have" and any other variants thereof are intended to cover non-exclusive inclusion. For example, a process, method, system, product, or device that includes a list of steps or units is not necessarily limited to those steps or units that are expressly listed, but may include other steps or units that are not expressly listed or inherent to the process, method, product, or device.

Persons skilled in the art may clearly understand that, for the purpose of convenient and brief description, for detailed working processes of the foregoing system, apparatus, and unit, refer to corresponding processes in the foregoing method embodiments. Details are not described herein again.

In several embodiments provided in this application, it should be understood that the disclosed system, apparatus, and method may be implemented in another manner. For example, the described apparatus embodiments are merely examples. For example, the unit division is merely logical module division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical, a mechanical, or another form.

The units described as separate parts may or may not be physically separate, and parts displayed as units may or may not be physical units, may be located in one position, or may be distributed on a plurality of network units. Some or all of the units may be obtained based on actual requirements to achieve the objectives of the solutions of embodiments.

In addition, module units in embodiments of this application may be integrated into one processing unit, or each of the units may exist alone physically, or two or more units are integrated into one unit. The integrated unit may be implemented in a form of hardware, or may be implemented in a form of a software module unit.

When the integrated unit is implemented in the form of a software module unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for indicating a computer device (which may be a personal computer, a server, or a network device) to perform all or some of the steps of the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

Persons skilled in the art should be aware that in the foregoing one or more examples, functions described in the present invention may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communication medium. The communication medium includes any medium that enables a computer program to be transmitted from one place to another. The storage medium may be any available medium accessible by a general-purpose or private computer.

The objectives, technical solutions, and beneficial effects of the present invention are further described in detail in the foregoing specific implementations. It should be understood that the foregoing descriptions are merely specific implementations of the present invention.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments, or make equivalent replacements to some technical features thereof, without departing from the scope of the technical solutions of embodiments of this application.

## Claims

1. A packet transmission method, wherein the method comprises:
receiving, by a first network device, a first data packet;
updating, by the first network device, the first data packet to obtain a second data packet, wherein the second data packet comprises a global identifier; and
sending, by the first network device, the second data packet to a second network device, wherein the global identifier is used by the second network device to verify the second data packet based on a correspondence, and the correspondence is a correspondence between the global identifier and an egress port through which the second network device transmits the second data packet.

2. The method according to claim 1, wherein the first network device is a provider edge PE device, and before the updating, by the first network device, the first data packet, the method further comprises:
determining, by the PE device based on a stored correspondence between an ingress port through which the PE device receives the first data packet and a global identifier, the global identifier corresponding to the ingress port.

3. The method according to claim 2, wherein the sending, by the first network device, the second data packet to a second network device comprises:
searching, by the first network device, a public network routing table based on a destination address of the first data packet, to determine an egress port matching the destination address; and
sending, by the first network device, the second data packet to the second network device through the egress port matching the destination address.

4. The method according to claim 1, wherein the first network device is a customer-premises equipment CPE, and before the updating, by the first network device, the first data packet, the method further comprises:
determining, by the CPE based on a stored correspondence between an egress port through which the CPE sends the first data packet and a global identifier, the global identifier corresponding to the egress port through which the CPE sends the first data packet.

5. The method according to claim 1, wherein the first network device is a customer-premises equipment CPE, and before the updating, by the first network device, the first data packet, the method further comprises:
determining, by the CPE based on a correspondence between a packet characteristic of the first data packet and a global identifier, the global identifier corresponding to the packet characteristic.

6. The method according to any one of claims 1 to 5, wherein before the updating, by the first network device, the first data packet, the method further comprises:
receiving, by the first network device, the global identifier from a control device.

7. The method according to claim 6, wherein the first network device is the CPE, and the control device comprises a software-defined wide area network SD-WAN controller.

8. The method according to any one of claims 1 to 7, wherein the second data packet is an IPv6 packet, and the global identifier is carried in one or more of the following fields in a basic header of the IPv6 packet:
a flow label flow label field and a destination address destination address field.

9. The method according to any one of claims 1 to 7, wherein the second data packet is an IPv6 packet, and the global identifier is carried in one or more of the following extension headers of the IPv6 packet:
a destination options header DOH and a hop-by-hop options header HBH.

10. The method according to any one of claims 1 to 7, wherein the second data packet is an MPLS packet, and the global identifier is carried in one or more of the following fields in a basic header of the MPLS packet:
an MPLS label field and an entropy label entropy label field.

11. The method according to any one of claims 1 to 10, wherein the global identifier comprises one or more of the following:
a slice identifier slice ID, a virtual network identifier VNID, and a preset identifier.

12. The method according to any one of claims 1 to 11, wherein the first network device and the second network device belong to an overlay overlay network system.

13. A packet transmission method, wherein the method comprises:
receiving, by a second network device, a second data packet from a first network device, wherein the second data packet comprises a first global identifier;
determining, by the second network device based on a correspondence between an egress port for sending the second data packet and a second global identifier, the second global identifier corresponding to the egress port; and
forwarding, by the second network device, the second data packet based on the egress port in response to a match between the first global identifier and the second global identifier.

14. The method according to claim 13, wherein before the determining, by the second network device, the second global identifier corresponding to the egress port, the method further comprises:
searching, by the second network device, a public network routing table based on a destination address of the second data packet, to determine an egress port matching the destination address.

15. The method according to claim 13 or 14, wherein the method further comprises:
discarding, by the second network device, the second data packet in response to a mismatch between the first global identifier and the second global identifier.

16. The method according to any one of claims 13 to 15, wherein before the determining, by the second network device based on a correspondence between an egress port for sending the second data packet and a second global identifier, the second global identifier corresponding to the egress port, the method further comprises:
determining, by the second network device based on a correspondence between an ingress port for receiving the second data packet and a third global identifier, the third global identifier corresponding to the ingress port; and
determining, by the second network device based on the correspondence between the egress port for sending the second data packet and the second global identifier, the second global identifier corresponding to the egress port in response to a match between the first global identifier and the third global identifier.

17. The method according to any one of claims 13 to 16, wherein the first network device is a customer-premises equipment CPE, and the second network device is a provider edge PE device.

18. The method according to any one of claims 13 to 16, wherein both the first network device and the second network device are PE devices.

19. The method according to any one of claims 13 to 18, wherein the forwarding, by the second network device, the second data packet based on the egress port comprises:
forwarding, by the second network device, the second data packet to a third network device based on the egress port, wherein the third network device is a CPE.

20. The method according to any one of claims 13 to 19, wherein before the forwarding, by the second network device, the second data packet based on the egress port, the method further comprises:
receiving, by the first network device, the second global identifier from a control device.

21. The method according to any one of claims 13 to 20, wherein the second data packet is an IPv6 packet, and the first global identifier is carried in one or more of the following fields in a basic header of the IPv6 packet:
a flow label flow label field and a destination address destination address field.

22. The method according to any one of claims 13 to 20, wherein the second data packet is an IPv6 packet, and the first global identifier is carried in one or more of the following extension headers of the IPv6 packet:
a destination options header DOH and a hop-by-hop options header HBH.

23. The method according to any one of claims 13 to 20, wherein the second data packet is an MPLS packet, and the first global identifier is carried in one or more of the following fields in a basic header of the MPLS packet:
an MPLS label field and an entropy label entropy label field.

24. The method according to any one of claims 13 to 23, wherein the first global identifier comprises one or more of the following:
a slice identifier slice ID, a virtual network identifier VNID, and a preset identifier.

25. The method according to any one of claims 13 to 24, wherein the first network device and the second network device belong to an overlay overlay network system.

26. A packet transmission apparatus, wherein the apparatus is used in a first network device and comprises:
a receiving unit, configured to receive a first data packet;
a processing unit, configured to update the first data packet to obtain a second data packet, wherein the second data packet comprises a global identifier, the global identifier is used by a second network device to verify the second data packet based on a correspondence, and the correspondence is a correspondence between the global identifier and an egress port through which the second network device transmits the second data packet; and
a forwarding unit, configured to forward the second data packet to the second network device.

27. The apparatus according to claim 26, wherein the first network device is a provider edge PE device; and
the processing unit is further configured to determine, based on a stored correspondence between an ingress port through which the PE device receives the first data packet and a global identifier, the global identifier corresponding to the ingress port.

28. The apparatus according to claim 27, wherein
the processing unit is further configured to search a public network routing table based on a destination address of the first data packet, to determine an egress port matching the destination address; and
the sending unit is configured to send the second data packet to the second network device through the egress port matching the destination address.

29. The apparatus according to claim 26, wherein the first network device is a customer-premises equipment CPE; and
the processing unit is further configured to determine, based on a stored correspondence between an egress port through which the CPE sends the first data packet and a global identifier, the global identifier corresponding to the egress port through which the CPE sends the first data packet.

30. The apparatus according to claim 26, wherein the first network device is a customer-premises equipment CPE; and
the processing unit is further configured to determine, based on a correspondence between a packet characteristic of the first data packet and a global identifier, the global identifier corresponding to the packet characteristic.

31. The apparatus according to any one of claims 26 to 30, wherein
the receiving unit is further configured to receive the global identifier from a control device.

32. The apparatus according to claim 31, wherein the first network device is the CPE, and the control device comprises a software-defined wide area network SD-WAN controller.

33. The apparatus according to any one of claims 26 to 32, wherein the second data packet is an IPv6 packet, and the global identifier is carried in one or more of the following fields in a basic header of the IPv6 packet:
a flow label flow label field and a destination address destination address field.

34. The apparatus according to any one of claims 26 to 32, wherein the second data packet is an IPv6 packet, and the global identifier is carried in one or more of the following extension headers of the IPv6 packet:
a destination options header DOH and a hop-by-hop options header HBH.

35. The apparatus according to any one of claims 26 to 32, wherein the second data packet is an MPLS packet, and the global identifier is carried in one or more of the following fields in a basic header of the MPLS packet:
an MPLS label field and an entropy label entropy label field.

36. The apparatus according to any one of claims 26 to 35, wherein the global identifier comprises one or more of the following:
a slice identifier slice ID, a virtual network identifier VNID, and a preset identifier.

37. The apparatus according to any one of claims 26 to 36, wherein the first network device and the second network device belong to an overlay overlay network system.

38. A packet transmission apparatus, wherein the apparatus is used in a second network device and comprises:
a receiving unit, configured to receive a second data packet from a first network device, wherein the second data packet comprises a first global identifier;
a processing unit, configured to determine, based on a correspondence between an egress port for forwarding the second data packet and a second global identifier, the second global identifier corresponding to the egress port; and
a forwarding unit, configured to forward the second data packet based on the egress port in response to a match between the first global identifier and the second global identifier.

39. The apparatus according to claim 38, wherein
the processing unit is further configured to search a public network routing table based on a destination address of the second data packet, to determine an egress port matching the destination address.

40. The apparatus according to claim 38 or 39, wherein
the processing unit is further configured to discard the second data packet in response to a mismatch between the first global identifier and the second global identifier.

41. The apparatus according to any one of claims 38 to 40, wherein
the processing unit is configured to determine, based on a correspondence between an ingress port for receiving the second data packet and a third global identifier, the third global identifier corresponding to the ingress port; and
the forwarding unit is configured to determine, based on the correspondence between the egress port for forwarding the second data packet and the second global identifier, the second global identifier corresponding to the egress port in response to a match between the first global identifier and the third global identifier.

42. The apparatus according to any one of claims 38 to 41, wherein the first network device is a customer-premises equipment CPE, and the second network device is a provider edge PE device.

43. The apparatus according to any one of claims 38 to 41, wherein both the first network device and the second network device are PE devices.

44. The apparatus according to any one of claims 38 to 43, wherein
the forwarding unit is configured to forward the second data packet to a third network device based on the egress port, wherein the third network device is a CPE.

45. The apparatus according to any one of claims 38 to 44, wherein
the receiving unit is further configured to receive the second global identifier from a control device.

46. The apparatus according to any one of claims 38 to 45, wherein the second data packet is an IPv6 packet, and the first global identifier is carried in one or more of the following fields in a basic header of the IPv6 packet:
a flow label flow label field and a destination address destination address field.

47. The apparatus according to any one of claims 38 to 45, wherein the second data packet is an IPv6 packet, and the first global identifier is carried in one or more of the following extension headers of the IPv6 packet:
a destination options header DOH and a hop-by-hop options header HBH.

48. The apparatus according to any one of claims 38 to 45, wherein the second data packet is an MPLS packet, and the first global identifier is carried in one or more of the following fields in a basic header of the MPLS packet:
an MPLS label field and an entropy label entropy label field.

49. The apparatus according to any one of claims 38 to 48, wherein the first global identifier comprises one or more of the following:
a slice identifier slice ID, a virtual network identifier VNID, and a preset identifier.

50. The apparatus according to any one of claims 38 to 49, wherein the first network device and the second network device belong to an overlay overlay network system.

51. A network device, wherein the network device comprises a processor chip and a memory, the memory is configured to store instructions or program code, and the processor chip is configured to invoke the instructions or the program code from the memory and run the instructions or the program code, to perform the packet transmission method according to any one of claims 1 to 12.

52. A network device, wherein the network device comprises a processor chip and a memory, the memory is configured to store instructions or program code, and the processor chip is configured to invoke the instructions or the program code from the memory and run the instructions or the program code, to perform the packet transmission method according to any one of claims 13 to 25.

53. A computer-readable storage medium, comprising instructions, a program, or code, wherein when the instructions, the program, or the code is executed on a computer, the computer is enabled to perform the packet transmission method according to any one of claims 1 to 25.
